# EUROPÄISCHE PATENTANMELDUNG

(11) **EP 4 583 256 A1**
(43) Veröffentlichungstag der Anmeldung: **09.07.2025**
(21) Anmeldenummer: 24217981.0
(22) Anmeldetag: 06.12.2024
(51) Int. Cl.: H01M 10/658, H01M 50/204, H01M 50/209, H01M 50/289, H01M 50/383

(54) **SCHOTTWANDDICHTUNG**

(30) Priorität: 04.01.2024 DE 102024100211
(71) Anmelder: Carl Freudenberg KG, 69469 Weinheim (DE)
(72) Erfinder: Kramer, Thomas, 64668 Zotzenbach (DE); Kritzer, Peter,, 67147 Forst (DE); Hasieber, Manuel, 69509 Mörlenbach (DE); Blake, Michael, Northville, MI 48167 (US); Calandra, Nico, 68519 Viernheim (DE); Zuber, Richard, 69517 Gorxheimertal (DE); Hille, Manuel, 64296 Darmstadt (DE)

(57) **Zusammenfassung**

Schottwanddichtung (1)zur Abdichtung eines ersten Energiespeichermoduls (41) zu einem zweiten Energiespeichermodul (42) in einem gemeinsamen Gehäuse (50), wobei das erste Energiespeichermodul und das zweite Energiespeichermodul durch eine Schottwand (30) voneinander getrennt sind. Die Schottwanddichtung umfasst einen Befestigungsbereich (20), welcher eingerichtet ist, an der Schottwand befestigt zu werden, eine erste Dichtlippe (11), eine zweite Dichtlippe (12) und eine mittlere Dichtlippe (13), welche zwischen der ersten Dichtlippe und der zweiten Dichtlippe angeordnet ist. Somit bildet sich zwischen der mittleren Dichtlippe und der ersten Dichtlippe ein erster Zwischenraum (14). Zwischen der zweiten Dichtlippe und der mittleren Dichtlippe bildet sich ein zweiter Zwischenraum (15). Dabei sind die erste Dichtlippe, die zweite Dichtlippe und die mittlere Dichtlippe eingerichtet, das Gehäuse zu kontaktieren. Die erste Dichtlippe ist eingerichtet, das erste Energiespeichermodul zum ersten Zwischenraum abzudichten und die zweite Dichtlippe ist eingerichtet, das zweite Energiespeichermodul zum zweiten Zwischenraum abzudichten. Dabei ist die mittlere Dichtlippe eingerichtet, den ersten Zwischenraum zum zweiten Zwischenraum abzudichten.

## Beschreibung

Die Erfindung betrifft eine Schottwanddichtung zur Abdichtung eines ersten Energiespeichermoduls zu einem zweiten Energiespeichermodul, sowie eine Schottwand mit Schottwanddichtung, ein Gehäuse und einen elektrischen Energiespeicher.

Elektrische Energiespeicher werden vermehrt zum Bereitstellen von Energie für elektrisch angetriebene Fahrzeuge, aber auch für stationäre Anwendungen eingesetzt. Ein häufig eingesetztes Energiespeichersystem ist dabei ein wiederaufladbarer Speicher in Form eines Lithium-Ionen-Akkumulators. Neben Lithium-Ionen-Akkumulatoren kommen auch Lithium-Schwefel-Batterien, Feststoff-Batterien, Natrium-lonen-Batterien, Batterien auf Basis anderer Leichtmetalle wie Magnesium oder Aluminium oder auch Metall-Luft -Batterien in Betracht. Des Weiteren kommen auch Superkondensatoren als Energiespeichersystem in Betracht. Lithium-Ionen-Akkumulatoren weisen, wie andere wiederaufladbare Speicher für elektrische Energie auch, zumeist mehrere Speicherzellen auf, welche gemeinsam in einem Gehäuse verbaut sind.

Solche elektrischen Energiespeicher können bei einem Fehlverhalten sicherheitsrelevante Folgen nach sich ziehen. So können beispielsweise zu hohe Temperaturen, interne und externe Kurzschlüsse in den einzelnen Zellen zu einer irreversiblen Schädigung des Energiespeichersystems führen. In diesem Zusammenhang ist insbesondere bei Lithiumlonen-Zellen das thermische Durchgehen ("thermal runaway") bekannt. Hierbei entlädt sich die in der Zelle gespeicherte Energie schlagartig und unkontrolliert. Dabei werden in kurzer Zeit hohe thermische Energiemengen sowie gasförmige und partikelförmige Reaktionsprodukte frei, woraus ein hoher Druck und hohe Temperaturen im Gehäuse resultieren. Die hierbei freigesetzten Reaktionsprodukte müssen sehr schnell und gezielt aus dem Batteriegehäuse abgeführt werden. Dazu besitzen Batteriegehäuse dezidierte Notöffnungen, durch welche dieser Überdruck abgebaut werden kann. Beim thermischen Durchgehen einer Zelle werden als Reaktionsprodukte neben heißen Gasen mit Temperaturen, die je nach verwendeter Zellchemie über 1000 °C liegen können, sowie Drücken von typischer Weise wenigstens 1 MPa, auch elektrisch leitfähige Partikel ausgeworfen. Dies sind z.B. Kohlenstoff-Partikel oder metallische Partikel, Metall-Tröpfchen und Salze unterschiedlicher Zusammensetzung. Besonders kritisch ist es, wenn die heißen Partikelströme zu lange auf andere Zellen einwirken können. Diese können dann ihrerseits thermisch Durchgehen, was eine unkontrollierte Kettenreaktion mit sich bringen kann.

Mehrere elektrisch miteinander verbundene Speicherzellen werden dabei meist zu einem Modul zusammengefasst. Die Module untereinander sind in der Regel durch Schottwände voneinander getrennt. Aufgabe dieser Schottwände ist es, beim thermischen Durchgehen einer Zelle in einem ersten Modul die Zellen in einem benachbarten zweiten Modul insbesondere vor den heißen Partikelströmen zu schützen.

Ein denkbarer Aufbau wäre es, die Schottwände nach unten hin zum Gehäuseboden und nach oben hin zum Deckel stoffschlüssig zu verbinden, zum Beispiel durch Verschweißen. Diese Anordnung hat die technischen Probleme, dass im Reparaturfall die einzelnen Module nicht mehr zugängig sind. Des Weiteren kann eine Verbindung von Gehäusebauteilen aus unterschiedlichen Materialien problematisch sein. Des Weiteren können Verbautoleranzen eine Verbindung der Bauteile erschweren.

Es ist Aufgabe der Erfindung eine Schottwanddichtung, eine Schottwand, ein Gehäuse und einen elektrischen Energiespeicher bereitzustellen, welche bei einer einfachen und kostengünstigen Herstellbarkeit ein zuverlässiges Dichtverhalten zwischen zwei Energiespeichermodulen eines elektrischen Energiespeichers ermöglichen, insbesondere beim thermischen Durchgehen von Zellen in einem der Energiespeichermodulen.

Dabei sollte die Schottwanddichtung insbesondere ein schnelles Ansprechverhalten bei plötzlichem einseitigen Druckanstieg aufweisen und ihre Dichtheit auch dann nicht verlieren, wenn die Schottwanddichtung heißen Partikelströmen ausgesetzt ist. Des Weiteren sollte die Schottwanddichtung auf schmale Schottwände anbringbar sein und einen hohen Toleranzausgleich zwischen der Schottwand und dem Gehäuse ermöglichen.

Diese Aufgabe wird durch eine Schottwanddichtung mit den Merkmalen des Anspruchs 1, eine Schottwand mit den Merkmalen des Anspruchs 12, ein Gehäuse mit den Merkmalen des Anspruchs 13 und einen elektrischen Energiespeicher mit den Merkmalen des Anspruchs 15 gelöst. Die Unteransprüche zeigen jeweils bevorzugte Weiterbildungen der Erfindung.

Die erfindungsgemäße Schottwanddichtung mit den Merkmalen des Anspruchs 1 weist den Vorteil auf, dass die Schottwanddichtung ein erstes Energiespeichermodul zu einem zweiten Energiespeichermodul abdichten kann, wenn eins der Energiespeichermodule thermisch durchgeht. Dabei kann die erfindungsgemäße Schottwanddichtung auch weiterhin abdichten, wenn sie von einem heißen Partikelstrom getroffen ist. Die erfindungsgemäße Schottwanddichtung weist ein schnelles Ansprechverhalten bei einem plötzlichen Druckanstieg auf und ist auf schmalen Schottwänden anbringbar. Des Weiteren ermöglicht die erfindungsgemäße Schottwanddichtung einen hohen Toleranzausgleich zwischen der Schottwand und dem Gehäuse.

Dies wird erfindungsgemäß dadurch erreicht, dass die Schottwanddichtung einen Befestigungsbereich umfasst, welcher eingerichtet ist, an der Schottwand befestigt zu werden. Des Weiteren umfasst die Schottwanddichtung eine erste Dichtlippe, eine zweite Dichtlippe und eine mittlere Dichtlippe. Dabei ist die mittlere Dichtlippe zwischen der ersten Dichtlippe und der zweiten Dichtlippe angeordnet, so dass sich zwischen der mittleren Dichtlippe und der ersten Dichtlippe ein erster Zwischenraum bildet und zwischen der zweiten Dichtlippe und der mittleren Dichtlippe ein zweiter Zwischenraum bildet. Die erste Dichtlippe, die zweite Dichtlippe und die mittlere Dichtlippe sind im eingebauten Zustand eingerichtet, das Gehäuse zu kontaktieren. Dabei ist die erste Dichtlippe eingerichtet, das erste Energiespeichermodul zum ersten Zwischenraum abzudichten. Die zweite Dichtlippe ist eingerichtet, das zweite Energiespeichermodul zum zweiten Zwischenraum abzudichten und die mittlere Dichtlippe ist eingerichtet, den ersten Zwischenraum zum zweiten Zwischenraum und den zweiten Zwischenraum zum ersten Zwischenraum abzudichten. Somit kann die erste oder zweite Dichtlippe bei einem thermischen Durchgehen im ersten oder zweiten Energiespeichermodul als Opferdichtlippe dienen, welche durch einen heißen Partikelstrom verspröden kann und darf. Dabei fungiert die versprödete erste oder zweite Dichtlippe als mechanische Barriere, welche insbesondere heiße Partikelströme davor hindert, weiter Elemente der Schottwanddichtung zu beschädigen. Insbesondere wird die mittlere Dichtlippe geschützt, welche zusammen mit der unbeschädigten ersten oder zweiten Dichtlippe die Dichtungsfunktion der Schottwanddichtung aufrechterhält.

Der erste und zweite Zwischenraum sind im unverbauten Zustand nach außen hin offen und im verbauten Zustand durch das Gehäuse abgeschlossen.

Die erfindungsgemäße Schottwanddichtung ist eine Profildichtung. Dabei weisen die erste Dichtlippe, die zweite Dichtlippe und die mittlere Dichtlippe vorzugsweise einen W-förmigen Querschnitt auf.

Die Schottwanddichtung wird vorzugsweise extrudiert. Sie kann aber auch als Formteil hergestellt werden.

Die erste Dichtlippe und die zweite Dichtlippe werden im verbauten Zustand vorzugsweise vom kontaktierenden Gehäuse nach außen gebogen, so dass sie einen Druckanstieg von dem ersten oder zweiten Energiespeichermodul gut gegen das Gehäuse abdichten können.

Die mittlere Dichtlippe wird im verbauten Zustand vorzugsweise von dem Gehäuse gestaucht, so dass die mittlere Dichtlippe beidseitig, bei einem Druckanstieg im ersten Zwischenraum oder zweiten Zwischenraum, zuverlässig abdichten kann.

Vorzugsweise weist die mittlere Dichtlippe eine Hohlkammer auf. Die Hohlkammer ermöglicht einen besseren Toleranzausgleich bei reduzierter Verpressungskraft der mittleren Dichtlippe und trägt somit zu einer besseren Dichtleistung bei.

Weiter bevorzugt sind die erste Dichtlippe und die zweite Dichtlippe spiegelsymmetrisch zu einer Schottwandebene ausgebildet. Die Schottwandebene ist komplanar zur Schottwand ausgerichtet und schneidet diese mittig. Somit kann eine Schottwanddichtung ermöglicht werden, welche zum Energiespeichermodul oder zum zweiten Energiespeichermodul die gleichen Dichteigenschaften aufweist.

Gemäß einer weiteren bevorzugten Ausgestaltung der Erfindung sind die erste Dichtlippe und die zweite Dichtlippe im unverformten Zustand höher als die mittlere Dichtlippe. Im eingebauten Zustand biegen sich somit die erste Dichtlippe und die zweite Dichtlippe von der Schottwanddichtung vorzugsweise nach außen weg und liegen mit einer Innenseite der Dichtlippe am Gehäuse an. Somit können die erste Dichtlippe und die zweite Dichtlippe druckaktiviert von außen zum ersten oder zweiten Zwischenraum abdichten und weisen ein schnelles Ansprechverhalten auf.

Besonders bevorzugt sind die erste Dichtlippe und die zweite Dichtlippe im unverformten Zustand 2,3- bis 3,7-mal höher als die mittlere Dichtlippe. Dies stellt sicher, dass die erste Dichtlippe und die zweite Dichtlippe im verbauten Zustand sicher an dem Gehäuse anliegen und zuverlässig abdichten.

Weiter bevorzugt sind die erste Dichtlippe und/oder die zweite Dichtlippe im unverformten Zustand in einem Winkel von 40° bis 50 zur Schottwandebene ausgerichtet. Der Winkel wird vorzugsweise von einer Mittelebene der ersten und/oder zweiten Dichtlippe zur Schottwandebene gemessen. Dies ermöglicht bei einem schmalen Befestigungsbereich die Bildung eines ersten und zweiten Zwischenraums, welcher die Dichteigenschaften verbessert und die mittlere Dichtlippe schützt. Die Anwinkelung der ersten Dichtlippe und/oder zweiten Dichtlippe ermöglicht ebenfalls ein schnelles Ansprechverhalten der Dichtung auf Druckänderungen und einen verbesserten Schutz vor Partikelströmen.

Die Schottwanddichtung umfasst vorzugsweise eine erste mittlere Dichtlippe und eine zweite mittlere Dichtlippe, wobei zwischen der ersten mittleren Dichtlippe und der zweiten mittleren Dichtlippe ein dritter Zwischenraum ausgebildet ist. Dabei ist die erste mittlere Dichtlippe eingerichtet, den ersten Zwischenraum zum dritten Zwischenraum abzudichten und die zweite mittlere Dichtlippe ist eingerichtet, den zweiten Zwischenraum zum dritten Zwischenraum abzudichten. Die zusätzliche mittlere Dichtlippe kann die Dichteigenschaften der Schottwanddichtung, insbesondere bei einer Beschädigung der ersten oder zweiten Dichtlippe durch einen heißen Partikelstrom, weiter verbessern. Besonders bevorzugt sind die erste mittlere Dichtlippe und die zweite mittlere Dichtlippe nach außen in einem Winkel zur Schottwandebene ausgerichtet, so dass sie druckaktiviert ihre Dichteigenschaft verbessern.

Vorzugsweise ist die Schottwanddichtung aus einem Silikon-Elastomer hergestellt. Silikon-Elastomere weisen eine erhöhte Temperaturstabilität auf. Zudem wandeln sie sich bei thermischer Beaufschlagung in mineralische Substanzen (Siliziumdioxid) um, welches nach einer hohen thermischen Belastung ein schützendes Gerüst zurücklässt. Somit bietet die erste und zweite Dichtlippe nach einer Zerstörung durch thermische Beaufschlagung weiterhin einen mechanischen Schutz der mittleren Dichtlippe.

Weiter bevorzugt umfasst die Schottwanddichtung flammresistente und/oder abrasionsresistente Füllstoffe. Solche Füllstoffe umfassen beispielsweise mineralische Füllstoffe in Form von Partikeln, Plättchen und Fasern wie zum Beispiel Aluminiumtrihydroxid oder andere Metallmischoxidhydroxide. Die Füllstoffe ermöglichen eine weitere Verbesserung der flammresistenten und abrasionsresistenten Eigenschaften der Schottwanddichtung.

Besonders bevorzugt weist die Schottwanddichtung eine intumeszierende Beschichtung auf. Die intumeszierende Beschichtung ist insbesondere im ersten Zwischenraum und/oder im zweiten Zwischenraum angebracht. Intumeszierende Beschichtungen sind aufschäumende Brandschutzbeschichtungen, welche eine Isolationsschicht bilden und die Hitzeeinwirkung auf die Schottwanddichtung reduzieren. Durch die Anbringung der intumeszierende Beschichtung im ersten Zwischenraum und/oder im zweiten Zwischenraum kann bei einem thermischen Durchgehen im ersten Energiespeichermodul oder zweiten Energiespeichermodul durch die Aktivierung der intumeszierenden Beschichtung die mittlere Dichtlippe vor der thermischen Belastung geschützt werden.

Der Befestigungsbereich der Schottwanddichtung ist vorzugsweise eingerichtet, auf die Schottwand aufgesteckt zu werden. Alternativ ist der Befestigungsbereich eingerichtet, in eine Nut der Schottwand eingebracht zu werden. Zwischen einem aufgesteckten oder eingebrachten Befestigungsbereich und der Schottwand wird vorzugsweise eine form- und/oder kraftschlüssige Verbindung ausgebildet. Zusätzlich oder alternativ kann der Befestigungsbereich vorzugsweise eingerichtet sein, mit der Schottwand stoffschlüssig verbunden zu werden. Somit kann eine zuverlässige Verbindung zwischen der Schottwanddichtung und der Schottwand sichergestellt werden. Des Weiteren wird somit die Aufbringung der Schottwanddichtung auf dünne Schottwände ermöglicht.

Ferner betrifft die vorliegende Erfindung eine Schottwand mit einer zuvor beschriebenen Schottwanddichtung.

Außerdem betrifft die vorliegende Erfindung ein Gehäuse für einen elektrischen Energiespeicher, welches eine Seitenwand, einen Deckel, eine Bodenplatte und eine zuvor beschriebene Schottwand umfasst.

Vorzugsweise ist die Schottwanddichtung des Gehäuses zwischen der Schottwand und dem Deckel und/oder zwischen der Schottwand und der Seitenwand und/oder zwischen der Schottwand und der Bodenplatte angeordnet. Dies ermöglicht bei einer einfachen Montage eine zuverlässige Abdichtung durch die Schottwand, die Schottwanddichtung und den Deckel. Des Weiteren kann der Deckel für Reparaturen einfach und zerstörungsfrei entfernt werden.

Des Weiteren betrifft die Erfindung einen elektrischen Energiespeicher, umfassend ein zuvor beschriebenes Gehäuse, ein erstes Energiespeichermodul und ein zweites Energiespeichermodul, wobei das erste Energiespeichermodul und das zweite Energiespeichermodul in dem Gehäuse angeordnet sind und durch die Schottwand und die Schottwanddichtung voneinander getrennt sind.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische perspektivische Darstellung eines elektrischen Energiespeichers mit einer Schottwanddichtung nach einem ersten Ausführungsbeispiel,
- Fig. 2: eine schematische Schnittdarstellung der Schottwanddichtung nach dem ersten Ausführungsbeispiel im unverformten Zustand,
- Fig. 3: eine schematische Schnittdarstellung der Schottwanddichtung nach dem ersten Ausführungsbeispiel im verbauten Zustand nach,
- Fig. 4: eine schematische Schnittdarstellung der Schottwanddichtung nach dem ersten Ausführungsbeispiel im einseitig druckbelasteten Zustand,
- Fig. 5: eine schematische Schnittdarstellung der Schottwanddichtung nach einem zweiten Ausführungsbeispiel,
- Fig. 6: eine schematische Schnittdarstellung der Schottwanddichtung nach einem dritten Ausführungsbeispiel und
- Fig. 7: eine schematische Schnittdarstellung der Schottwanddichtung nach einem vierten Ausführungsbeispiel.

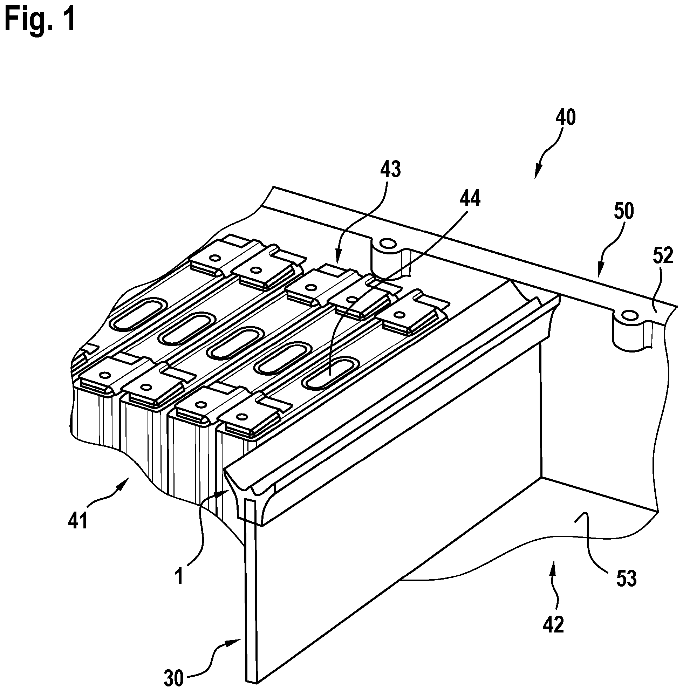

Nachfolgend wird unter Bezugnahme auf die Figuren 1 bis 4 eine Schottwanddichtung 1 eines elektrischen Energiespeichers 40 zur Abdichtung eines ersten Energiespeichermoduls 41 zu einem zweiten Energiespeichermodul 42 in einem gemeinsamen Gehäuse 50 gemäß der vorliegenden Erfindung im Detail beschrieben.

Figur 1 zeigt schematischeinen Aufbau des elektrischen Energiespeichers 40 mit einem ersten Energiespeichermodul 41 und einem zweiten Energiespeichermodul 42. Das erste Energiespeichermodul 41 und das zweite Energiespeichermodul 42 sind in dem Gehäuse 50 auf einer Bodenplatte 53 angeordnet und von einer Seitenwand 52 des Gehäuses 50 umschlossen.

Zwischen dem ersten Energiespeichermodul 41 und dem zweiten Energiespeichermodul 42 ist die Schottwand 30 angeordnet, welche eine stoffliche und thermische Barriere darstellt. Auf der Schottwand 30 ist die Schottwanddichtung 1 nach dem ersten Ausführungsbeispiel angeordnet, welche eingerichtet ist, einen nicht dargestellten Deckel 51 des Gehäuses 50 zu kontaktieren. Die Schottwanddichtung 1 erstreckt sich über die gesamte Länge der Schottwand 30. Alternativ oder zusätzlich kann die Schottwanddichtung 1 zwischen der Schottwand 30 und der Seitenwand 52 angeordnet sein und an der Seitenwand 52 den elektrischen Energiespeicher 40 abdichten.

In dem ersten Energiespeichermodul 41 sind eine Vielzahl prismatischer Batteriezellen 43 angeordnet. Die prismatischen Batteriezellen 43 weisen eine Berstöffnung 44 auf, welche eingerichtet ist, im Falle eines thermischen Durchgehens einer prismatischen Batteriezelle 43 druck- und/oder temperaturaktiviert zu öffnen und eine Zellchemie nach außen abzuleiten. In dem zweiten Energiespeichermodul 42 sind vorzugsweise ebenfalls eine Vielzahl von prismatischen Batteriezellen 43 angeordnet, welche aus Darstellungsgründen nicht gezeigt sind.

Die Schottwand 30 ermöglicht zusammen mit der Schottwanddichtung 1 einen zuverlässigen Schutz des ersten Energiespeichermoduls 41 und des zweiten Energiespeichermoduls 42 vor einer Beschädigung durch das thermische Durchgehen in einem der angrenzenden Energiespeichermodule 41, 42. Der elektrische Energiespeicher 40 umfasst vorzugsweise eine Vielzahl von Energiespeichermodulen 41, 42, welche durch Schottwände 30 und Schottwanddichtungen 1 voneinander getrennt sind.

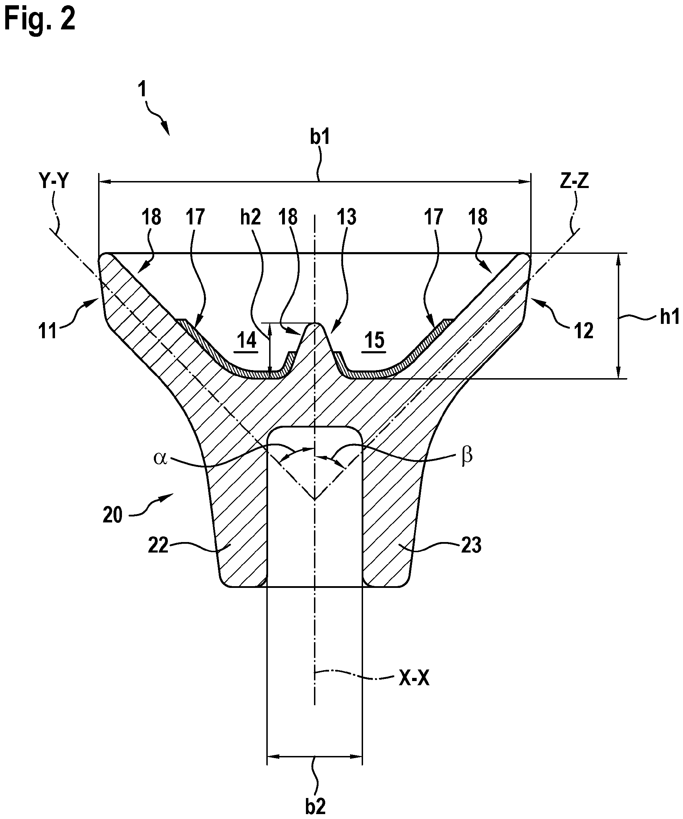

Figur 2 zeigt eine Schnittdarstellung der Schottwanddichtung 1 nach dem ersten Ausführungsbeispiel im unverformten Zustand. Die Schottwanddichtung 1 weist einen Befestigungsbereich 20 auf, welcher eingerichtet ist, auf eine Schottwand 30 gesteckt zu werden.

Der Befestigungsbereich 20 weist einen ersten Arm 22 und einen gegenüberliegenden zweiten Arm 23 auf, welche eingerichtet sind, die Schottwand 30 beidseitig seitlich zu kontaktieren und eine kraftschlüssige Verbindung herzustellen. Zusätzlich kann durch einen Kleber, welcher zwischen die Schottwanddichtung 1 und die Schottwand 30 eingebracht wir, eine stoffschlüssige Verbindung zwischen der Schottwanddichtung 1 und der Schottwand 30 ausgebildet werden.

Oberhalb des Befestigungsbereichs 20 ist seitlich eine erste Dichtlippe 11 und eine zweite Dichtlippe 12 angebracht. Dabei geht die erste Dichtlippe 11 fließend in den ersten Arm 22 über und die zweite Dichtlippe 12 geht fließend in den zweiten Arm 23 über. Die erste Dichtlippe 11 und zweite Dichtlippe 12 sind spiegelsymmetrisch zu einer Schottwandebene X-X ausgebildet. Die Schottwandebene X-X ist komplanar zu der Schottwand 30 ausgerichtet, welche sie mittig schneidet.

Die erste Dichtlippe 11 weist eine erste Mittelebene Y-Y auf, welche die erste Dichtlippe 11 mittig schneidet. Dabei ist die erste Dichtlippe 11 derart ausgebildet, dass die erste Mittelebene Y-Y in einem ersten 45° Winkel α zur Schottwandebene X-X ausgerichtet ist.

Die zweite Dichtlippe 12 weist eine zweite Mittelebene Z-Z auf, welche die zweite Dichtlippe 12 mittig schneidet. Dabei ist die zweite Dichtlippe 12 ebenfalls derart ausgebildet, dass die zweite Mittelebene Z-Z in einem zweiten 45° Winkel β zur Schottwandebene X-X ausgerichtet ist.

Zwischen der ersten Dichtlippe 11 und der zweiten Dichtlippe 12 ist eine mittlere Dichtlippe 13 angeordnet. Dabei bildet die Schottwandebene X-X die Mittelebene der mittleren Dichtlippe 13.

Zwischen der ersten Dichtlippe 11 und der mittleren Dichtlippe 13 bildet sich ein erster Zwischenraum 14. Ebenso bildet sich zwischen der zweiten Dichtlippe 12 und der mittleren Dichtlippe 13 ein zweiter Zwischenraum 15.

Im Bereich des ersten Zwischenraums 14 und des zweiten Zwischenraums 15 ist eine intumeszierende Beschichtung 17 auf der Schottwanddichtung 1 angebracht. Die intumeszierende Beschichtung 17 ist im nicht druckbeaufschlagten Zustand nicht in einem Kontaktbereich 18 der ersten Dichtlippe 11, zweiten Dichtlippe 12 und mittleren Dichtlippe 13 angebracht, um deren Dichteigenschaften nicht zu verschlechtern. Der Kontaktbereich 18 ist eingerichtet, das Gehäuse 50 des elektrischen Energiespeichers 40 zu kontaktieren.

Die Schottwanddichtung 1 weist im unverformten Zustand zwischen der ersten Dichtlippe 11 und der zweiten Dichtlippe 12 vorzugsweise eine erste Breite b1 von 11,4 mm auf. Die erste Breite b1 wird senkrecht zur Schottwandebene X-X gemessen und beschreibt die maximale Breite der Schottwanddichtung 1.

Der Befestigungsbereich 20 weist im unverformten Zustand zwischen dem ersten Arm 22 und dem zweiten Arm 23 eine zweite Breite b2 von 2,5 mm auf. Die zweite Breite b2 ist abhängig von der Dicke der Schottwand 30 und ist vorzugsweise so gewählt, dass eine Übermaßpassung oder Übergangspassung zwischen dem Befestigungsbereich 20 und der Schottwand 30 vorliegt.

Die erste Dichtlippe 11 und die zweite Dichtlippe 12 weisen eine erste Höhe h1 von 3,3 mm auf. Die erste Höhe h1 wird parallel zur Schottwandebene X-X zwischen dem tiefsten Punkt des ersten oder zweiten Zwischenraums 14, 15 und der höchsten Spitze der ersten Dichtlippe 11 oder zweiten Dichtlippe 12 gemessen.

Die mittlere Dichtlippe 13 weist eine zweite Höhe h2 von 1,4 mm auf. Die zweite Höhe h2 wird parallel zur Schottwandebene X-X zwischen dem tiefsten Punkt des ersten oder zweiten Zwischenraums 14, 15 und der Spitze der mittleren Dichtlippe 13 gemessen. Somit ist die erste Dichtlippe 11 und zweite Dichtlippe 12 im unverformten Zustand 2,36-mal höher als die mittlere Dichtlippe 13.

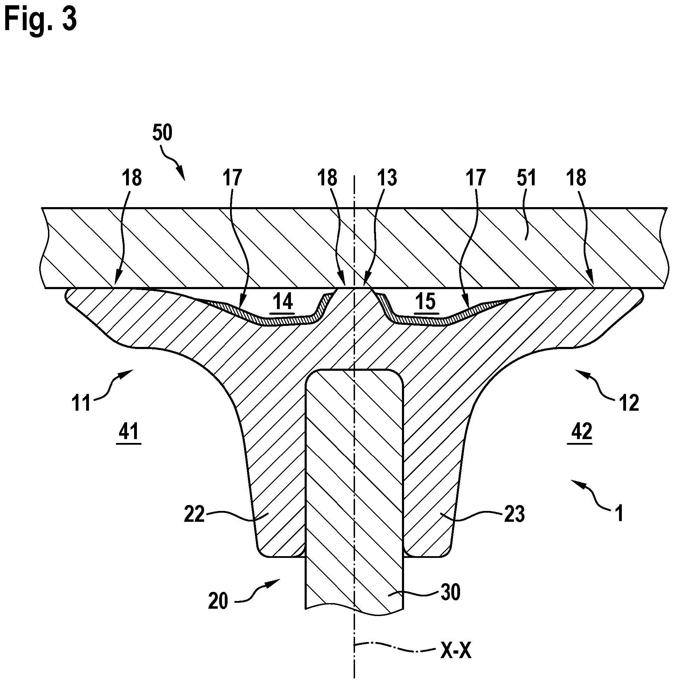

Figur 3 zeigt die Schottwanddichtung 1 nach dem ersten Ausführungsbeispiel im verformten Zustand zwischen der Schottwand 30 und dem Deckel 51 des Gehäuses 50.

Der Deckel 51 übt eine Kraft auf die Schottwanddichtung 1 aus, so dass die erste Dichtlippe 11 und die zweite Dichtlippe 12 von der Schottwandebene X-X aus nach außen gebogen werden. Dabei liegen die Kontaktbereiche 18 der Schottwanddichtung 1 an dem Deckel 51 an und üben eine Kraft auf den Deckel 51 auf, so dass das erste Energiespeichermodul 41 durch die erste Dichtlippe 11 zum ersten Zwischenraum 14 abgedichtet ist und das zweite Energiespeichermodul 42 durch die zweite Dichtlippe 12 zum zweiten Zwischenraum 15 abgedichtet ist. Durch die nach außen gebogene Form der ersten und zweiten Dichtlippe 11, 12 erhöht sich bei einem Druckanstieg im ersten oder zweiten Energiespeichermodul 41, 42 die Kraft des Kontaktbereichs 18 auf das Gehäuse 50, wodurch die Dichteigenschaften der Schottwanddichtung 1 steigen.

Die nach außen gebogene Form der ersten und zweiten Dichtlippe 11, 12 erhöht ebenfalls die Kraft des ersten und zweiten Arms 22, 23 auf die Schottwand 30.

Die mittlere Dichtlippe 13 wird von dem Deckel 51 entlang der Schottwandebene X-X gestaucht, so dass die mittlere Dichtlippe 13 beidseitig gut zwischen dem ersten Zwischenraum 14 und dem zweiten Zwischenraum 15 abdichtet.

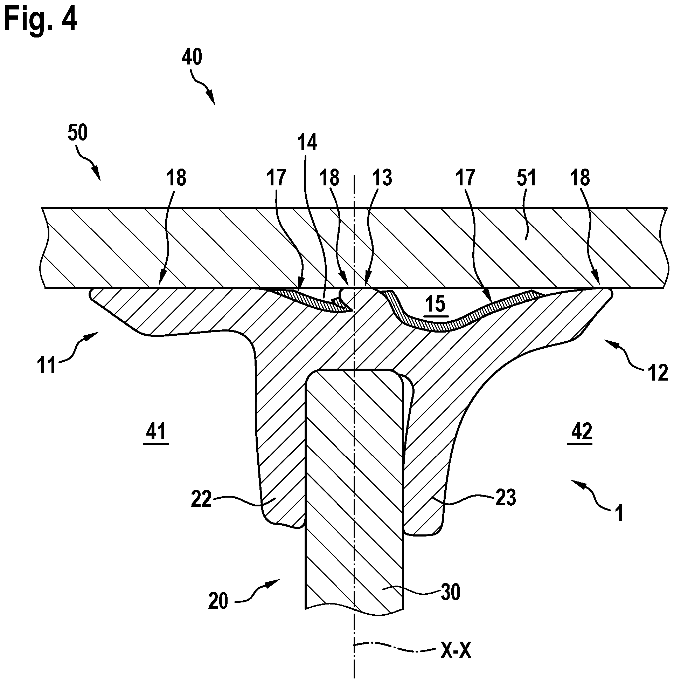

Figur 4 zeigt ein Simulationsergebnis der Schottwanddichtung 1 nach dem ersten Ausführungsbeispiel, bei dem im elektrischen Energiespeicher 40 im ersten Energiespeichermodul 41 ein Druck von 1000 kPa vorliegt und im zweiten Energiespeichermodul 42 ein Druck von 100 kPa vorliegt. Dabei ist die Schottwanddichtung 1 an der Schottwand 30 befestigt und kontaktiert den Deckel 51 des Gehäuses 50.

Die Druckverhältnisse simulieren die Belastung der Schottwanddichtung 1 bei einem thermischen Durchgehen des ersten Energiespeichermoduls 41. Durch die Druckdifferenz verformt sich die Schottwanddichtung 1, wobei die erste Dichtlippe 11 stärker an den Deckel 51 gedrückt wird und sich der Kontaktbereich 18 zwischen der ersten Dichtlippe 11 und dem Deckel 51 vergrößert. Die mittlere Dichtlippe 13 verschiebt sich durch die Druckdifferenz zwischen dem ersten Energiespeichermodul 41 und dem zweiten Energiespeichermodul 42 in Richtung des zweiten Energiespeichermoduls 42. Dabei bleibt der Kontaktbereich 18 zwischen der mittleren Dichtlippe 13 und dem Deckel 51 im Wesentlichen unverändert. Die zweite Dichtlippe 12 biegt sich durch die Druckdifferenz weiter in Richtung des zweiten Energiespeichermoduls 42, wodurch der Kontaktbereich 18 zwischen der zweiten Dichtlippe 12 und dem Deckel 51 abnimmt.

Sollte die erste Dichtlippe 11 im Zusammenhang mit dem thermischen Durchgehen im ersten Energiespeichermodul 41 stark thermisch belastet werden oder einem Partikelstrom ausgesetzt sein, so dass die erste Dichtlippe 11 beschädigt wird und ihre Dichteigenschafft verliert, so dichtet die mittlere Dichtlippe 13 und die zweite Dichtlippe 12 weiterhin das erste Energiespeichermodul 41 zum zweiten Energiespeichermodul 42 ab. Ohne der mittleren Dichtlippe 13 würde die zweite Dichtlippe 12 bei einer Beschädigung der ersten Dichtlippe ihre Dichteigenschaft verlieren.

Die erste Dichtlippe 11 schützt auch im beschädigten Zustand die mittlere Dichtlippe 13 vor einer Beschädigung. Der erste Zwischenraum 14 bildet bei einer beschädigten ersten Dichtlippe 11 eine thermische Isolationsschicht, welche die mittlere Dichtlippe 13 vor einer thermischen Beschädigung schützt. Die intumeszierende Beschichtung 17 im ersten Zwischenraum 14 kann sich temperaturaktiviert ausdehnen und die thermische Isolationsfähigkeit des ersten Zwischenraums 14 weiter verbessern. Dabei fällt die Ausdehnung vorzugsweise moderat aus, so dass die Volumenzunahme die mittlere Dichtlippe 13 nicht mechanisch beschädigt oder ihre Dichteigenschaft verschlechtert.

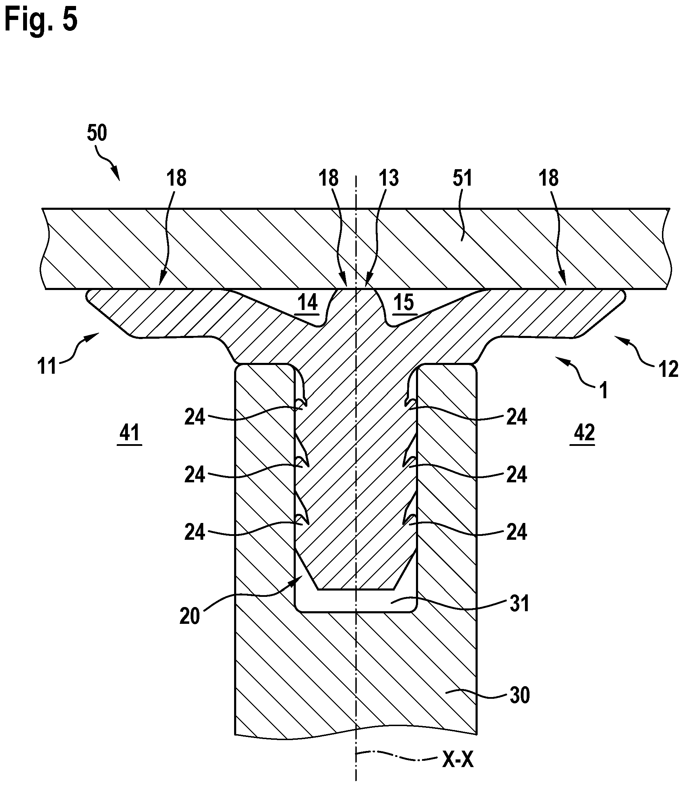

Figur 5 zeigt den Querschnitt einer Schottwanddichtung 1 nach einem zweiten Ausführungsbeispiel. Die Schottwanddichtung 1 ist in einer Nut 31 der Schottwand befestigt und dichtet gegen den Deckel 51 des Gehäuses 50 ab.

Die erste Dichtlippe11, die zweite Dichtlippe 12 und die mittlere Dichtlippe 13 des zweiten Ausführungsbeispiels entsprechen dem ersten Ausführungsbeispiel. Dabei ist im Bereich des ersten Zwischenraums 14 und zweiten Zwischenraums 15 keine intumeszierende Beschichtung 17 angebracht.

Der Befestigungsbereich 20 des zweiten Ausführungsbeispiels unterscheidet sich vom ersten Ausführungsbeispiel. Die Schottwanddichtung 1 in Figur 5 weist beidseitig jeweils drei elastische Widerhaken 24 auf, welche eine Kraft auf die Seitenwände der Nut 31 ausüben. Somit bildet der Befestigungsbereich 20 eine kraftschlüssige Verbindung zwischen der Schottwand 30 und der Schottwanddichtung 1 aus.

Durch eine entsprechende Struktur der Nut 31 kann zusätzlich eine formschlüssige Verbindung zwischen den Widerhaken 24 der Schottwanddichtung und der Schottwand 30 ausgebildet werden.

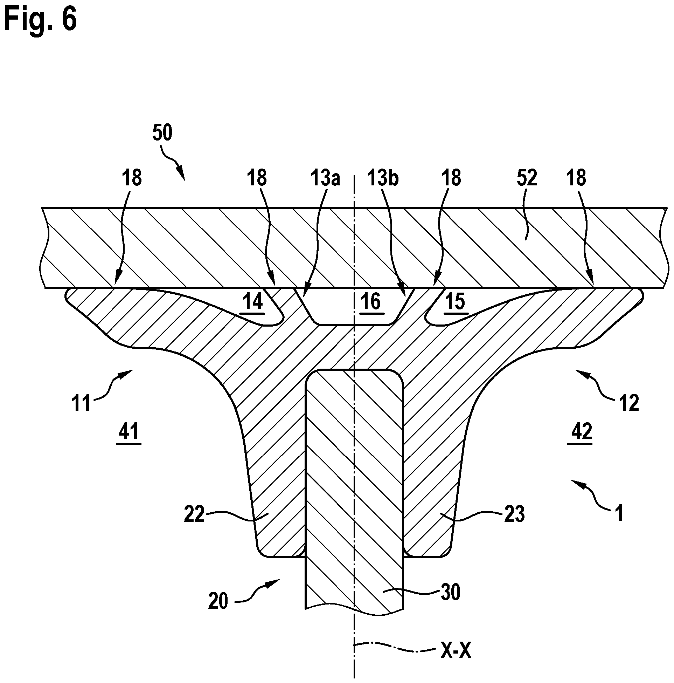

Figur 6 zeigt den Querschnitt der Schottwanddichtung 1 nach einem dritten Ausführungsbeispiel. Die Schottwanddichtung 1 ist in Figur 6 zwischen der Schottwand 30 und der Seitenwand 52 des Gehäuses 50 angeordnet. Dabei weist das dritte Ausführungsbeispiel einen vergleichbaren Befestigungsbereich 20 auf wie das erste Ausführungsbeispiel.

Das dritte Ausführungsbeispiel weist im Gegensatz zum ersten Ausführungsbeispiel eine erste mittlere Dichtlippe 13a und eine zweite mittlere Dichtlippe 13b auf. Die zusätzliche Dichtlippe kann die Dichteigenschaft der Schottwanddichtung 1 steigern.

Zwischen der ersten mittleren Dichtlippe 13a und der zweiten mittleren Dichtlippe 13b ist ein dritter Zwischenraum 16 gebildet. Des Weiteren ist zwischen der ersten Dichtlippe 11 und der ersten mittleren Dichtlippe 13a weiterhin der erste Zwischenraum 14 ausgebildet. Zwischen der zweiten Dichtlippe 12 und der zweiten mittleren Dichtlippe 13b ist ebenfalls weiterhin der zweite Zwischenraum 15 ausgebildet.

Die erste mittlere Dichtlippe 13a und die zweite mittlere Dichtlippe 13b sind von der Schottwandebene X-X weg ausgerichtet, so dass der Kontaktbereich 18 der erste Dichtlippe 13a bei einem Druckanstieg im ersten Zwischenraum 14 druckaktiviert gegen die Seitenwand 52 gedrückt wird und die Dichteigenschaft der Schottwanddichtung 1 verbessert. Der Kontaktbereich 18 der zweiten mittlere Dichtlippe 13b wird ebenso durch einen Druckanstieg im zweiten Zwischenraum 15 druckaktiviert gegen die Seitenwand 52 des Gehäuses 50 gedrückt und verbessert die Dichteigenschaft der Schottwanddichtung 1.

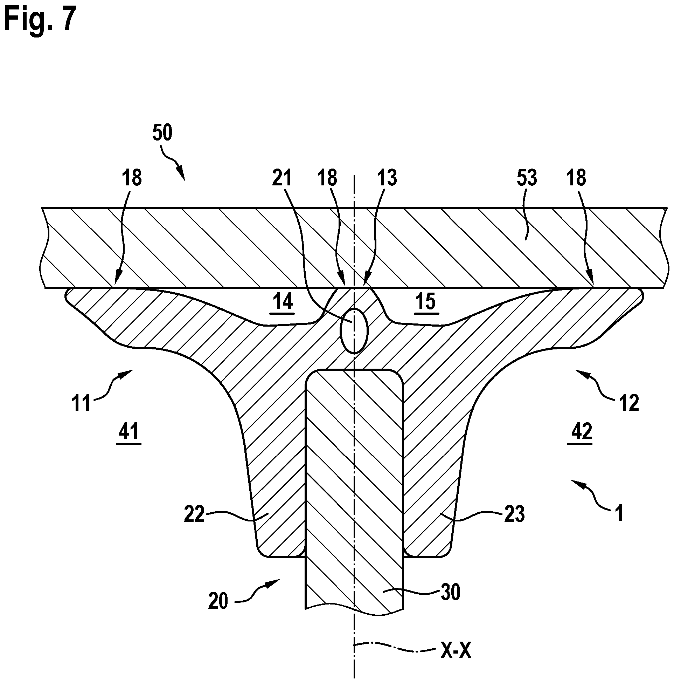

Figur 7 zeigt einen Querschnitt der Schottwanddichtung 1 nach einem vierten Ausführungsbeispiel. Die Schottwanddichtung 1 ist auf der Schottwand 30 befestigt und dichtet gegen die Bodenplatte 53 des Gehäuses 50 ab.

Die Schottwanddichtung 1 nach dem vierten Ausführungsbeispiel ist analog zur Schottwanddichtung 1 nach dem ersten Ausführungsbeispiel ausgeführt und unterscheidet sich lediglich durch eine Hohlkammer 21, welche in der mittleren Dichtlippe 13 angeordnet ist. Die Hohlkammer 21 ist mittig auf der Schottwandebene X-X zwischen der Schottwand 30 und dem Gehäuse 50 angeordnet.

Vorzugsweise erstreckt sich die Hohlkammer 21 in Längsrichtung über die gesamte Länge der Schottwanddichtung 1.

Die Hohlkammer 21 ermöglicht eine verbesserte Nachgiebigkeit der mittleren Dichtlippe 13 entlang der Schottwandebene X-X in Richtung der Schottwand 30. Somit kann ein verbesserter Toleranzausgleich der mittleren Dichtlippe 13 zwischen der Schottwand 30 und dem Gehäuse 50 gewährleistet werden. Des Weiteren kann somit ein gleichmäßiger Anpressdruck zwischen dem Gehäuse 50 und der mittleren Dichtlippe 13 sichergestellt werden, was in einer zuverlässigen Dichteigenschaft der Schottwanddichtung 1 resultiert.

## Patentansprüche

1. Schottwanddichtung zur Abdichtung eines ersten Energiespeichermoduls (41) zu einem zweiten Energiespeichermodul (42) in einem gemeinsamen Gehäuse (50), wobei das erste Energiespeichermodul (41) und das zweite Energiespeichermodul (42) durch eine Schottwand (30) voneinander getrennt sind, umfassend
• einen Befestigungsbereich (20), welcher eingerichtet ist, an der Schottwand (30) befestigt zu werden,
• eine erste Dichtlippe (11),
• eine zweite Dichtlippe (12) und
• eine mittlere Dichtlippe (13), welche zwischen der ersten Dichtlippe (11) und der zweiten Dichtlippe (12) angeordnet ist, so dass sich zwischen der mittleren Dichtlippe (13) und der ersten Dichtlippe (11) ein erster Zwischenraum (14) bildet und zwischen der zweiten Dichtlippe (12) und der mittleren Dichtlippe (13) ein zweiter Zwischenraum (15) bildet,
• wobei die erste Dichtlippe (11), die zweite Dichtlippe (12) und die mittlere Dichtlippe (13) eingerichtet sind, das Gehäuse (50) zu kontaktieren,
• wobei die erste Dichtlippe (11) eingerichtet ist, das erste Energiespeichermodul (41) zum ersten Zwischenraum (14) abzudichten,
• wobei die zweite Dichtlippe (12) eingerichtet ist, das zweite Energiespeichermodul (42) zum zweiten Zwischenraum (15) abzudichten und
• wobei die mittlere Dichtlippe (13) eingerichtet ist, den ersten Zwischenraum (14) zum zweiten Zwischenraum (15) abzudichten.

2. Schottwanddichtung nach Anspruch 1, wobei die mittlere Dichtlippe (13) eine Hohlkammer (21) aufweist.

3. Schottwanddichtung nach einem der vorhergehenden Ansprüche, wobei die erste Dichtlippe (11) und die zweite Dichtlippe (12) spiegelsymmetrisch zu einer Schottwandebene (X-X) sind.

4. Schottwanddichtung nach einem der vorhergehenden Ansprüche, wobei die erste Dichtlippe (11) und die zweite Dichtlippe (12) im unverformten Zustand höher sind als die mittlere Dichtlippe (13).

5. Schottwanddichtung nach Anspruch 4, wobei die erste Dichtlippe (11) und die zweite Dichtlippe (12) im unverformten Zustand 2,3- bis 3,7-mal höher sind als die mittlere Dichtlippe (13).

6. Schottwanddichtung nach einem der vorhergehenden Ansprüche, wobei die erste Dichtlippe (11) und/oder die zweite Dichtlippe (12) im unverformten Zustand in einem Winkel (α) von 40° bis 50° zur Schottwandebene (X-X) ausgerichtet sind.

7. Schottwanddichtung nach einem der vorhergehenden Ansprüche, umfassend eine erste mittlere Dichtlippe (13a) und eine zweite mittlere Dichtlippe (13b), wobei zwischen der ersten mittleren Dichtlippe (13a) und der zweiten mittleren Dichtlippe (13b) ein dritter Zwischenraum (16) ausgebildet ist, wobei die erste mittlere Dichtlippe (13a) eingerichtet ist, den ersten Zwischenraum (14) zum dritten Zwischenraum (16) abzudichten und wobei die zweite mittlere Dichtlippe (13b) eingerichtet ist, den zweiten Zwischenraum (15) zum dritten Zwischenraum (16) abzudichten.

8. Schottwanddichtung nach einem der vorhergehenden Ansprüche, wobei die Schottwanddichtung (1) aus einem Silikon-Elastomer hergestellt ist.

9. Schottwanddichtung nach einem der vorhergehenden Ansprüche, wobei die Schottwanddichtung (1) flammresistente und/oder abrasionsbeständige Füllstoffe umfasst.

10. Schottwanddichtung nach einem der vorhergehenden Ansprüche, wobei die Schottwanddichtung (1) eine intumeszierende Beschichtung (17) aufweist, insbesondere im ersten Zwischenraum (14) und/oder im zweiten Zwischenraum (15).

11. Schottwanddichtung nach einem der vorhergehenden Ansprüche, wobei der Befestigungsbereich (20) eingerichtet ist, auf die Schottwand (30) aufgesteckt zu werden oder wobei der Befestigungsbereich (20) eingerichtet ist, in eine Nut (31) der Schottwand (30) eingebracht zu werden und/oder wobei der Befestigungsbereich (20) eingerichtet ist, mit der Schottwand (30) stoffschlüssig verbunden zu werden.

12. Schottwand mit Schottwanddichtung (1) nach einem der vorhergehenden Ansprüche.

13. Gehäuse für einen elektrischen Energiespeicher (40), umfassend eine Seitenwand (51), einen Deckel (52), eine Bodenplatte (53) und eine Schottwand (30) nach Anspruch 12.

14. Gehäuse nach Anspruch 13, wobei die Schottwanddichtung (1) zwischen der Schottwand (30) und dem Deckel (51) und/oder zwischen der Schottwand (30) und der Seitenwand (52) und/oder zwischen der Schottwand (30) und der Bodenplatte (53) angeordnet ist.

15. Elektrischer Energiespeicher, umfassend ein Gehäuse (50) nach einem der Ansprüche 13 oder 14, ein erstes Energiespeichermodul (41) und ein zweites Energiespeichermodul (42), wobei das erste Energiespeichermodul (41) und das zweite Energiespeichermodul (42) in dem Gehäuse (50) angeordnet sind und durch die Schottwand (30) und die Schottwanddichtung (1) voneinander getrennt sind.
